# EUROPEAN PATENT SPECIFICATION

(11) **EP 1 564 065 B1**
(45) Date of publication and mention of the grant of the patent: **02.07.2008**
(21) Application number: 05002669.9
(22) Date of filing: 09.02.2005
(51) Int. Cl.: B60N 2/28

(54) **Child seat and shoulder adjuster**
Kindersitz und Schulterverstellung
Siège enfant et dispositif de réglage pour les épaules

(30) Priority: 10.02.2004 JP 2004033700; 13.01.2005 JP 2005006565
(43) Date of publication of application: 17.08.2005
(73) Proprietor: TAKATA CORPORATION, Minato-ku, Tokyo 106-8510 (JP)
(72) Inventor: Sakumoto, Masayuki, Tokyo 106-8510 (JP)
(74) Representative: Banzer, Hans-Jörg

(56) References cited:
- EP-A- 0 287 259
- JP-U- 2 008 636
- US-A- 6 079 780
- US-A1- 2002 195 867

## Description

The present invention relates to a child seat installed in a seat of a vehicle, and more particularly, to a child seat having means for adjusting the height of webbings for securing a child.

Conventionally, it is common that a child sitting in a child seat is secured by webbings installed in the child seat.

Japanese Unexamined Utility Model Registration Application Publication No. 2-8636 discloses such a child seat in which the height of webbings can be adjusted by providing a backrest portion of the child seat with a sliding member having webbing insertion holes so as to be vertically movable, and by moving the sliding member vertically.

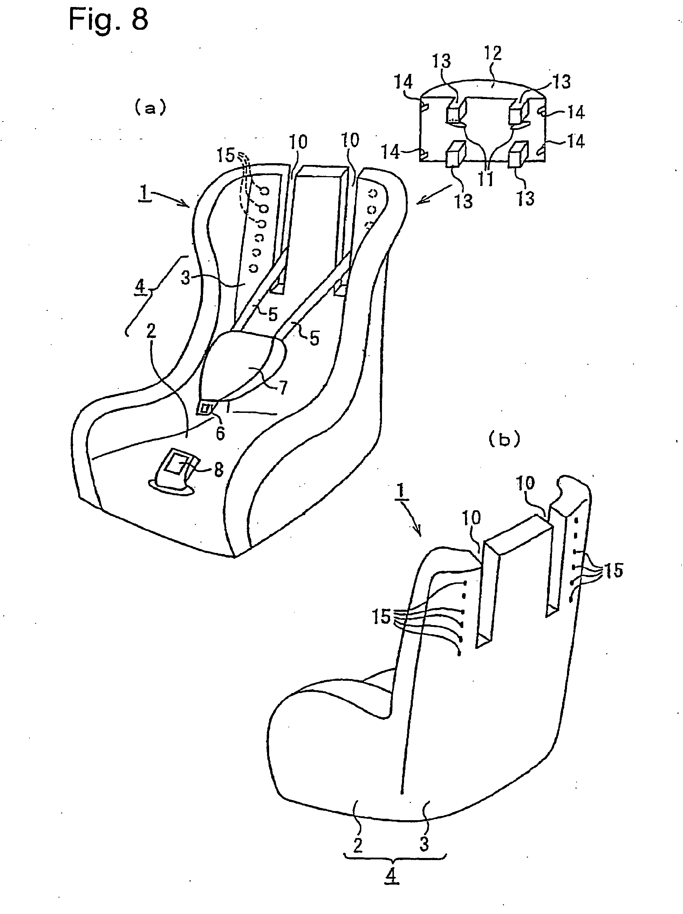

Fig. 8(a) is an exploded perspective view showing the child seat of Japanese Unexamined Utility Model Registration Application Publication No. 2-8636, and Fig. 8(b) is a perspective view, as seen from the rear side, of a seat main body of the child seat.

A child seat 1 has a seat main body 4 having a seating portion 2 and a backrest portion 3, and is constructed so as to be attached to an adult passenger seat by an adult seat belt.

Leading end portions of webbings (shoulder belts) 5 are connected to a breastplate pad 7. A tongue 6 of a leading end of the breastplate pad 7 is adapted to be mountable to a buckle 8. A pair of left and right elongated slots 10 is formed along a vertical direction at an upper end of the backrest portion 3, and a sliding member 12 having insertion holes 11 for the respective shoulder belts 5 at positions overlapping these elongated slots 10 is adapted to be installed at the upper end of the backrest portion 3 so as to be capable of adjusting its vertical position. The sliding member 12 is constructed to be movably adjustable in the vertical direction by fitting protrusions 13 provided to protrude from the sliding member 12 into the elongated slots 10. Further, engaging pins 14 on the side of the sliding member 12 are engaged with a plurality of engaging holes 15 formed on the rear side of the backrest portion 3 at desired places, so that it is possible to have a configuration fixed in an assembled manner.

According to this configuration, by suitably moving the sliding member 12 in the vertical direction at the upper end of the backrest portion 3 to thus adjust the height of the sliding member 12, the height of the shoulder belts 5, which are withdrawn through the insertion holes 11 of the sliding member 12 and the elongated slots 10 on the side of the backrest portion 3, can be adjusted in the vertical direction in multiple steps without removing the belts, so that it is possible to adjust the withdrawal height of the belts 5 corresponding to a child's growth.

In the case of Japanese Unexamined Utility Model Registration Application Publication No. 2-8636, it is possible to perform height adjustment of the webbings only from the rear side of the backrest portion. For this reason, even when the child seat is fixed to a seat of an automobile toward the front side, the height adjustment of the webbings is impossible or considerably difficult.

A child seat according to the preamble of claim 1 is known from EP 0 287 259 A2.

It is an object of the present invention to provide a child seat in which the height adjustment of the webbings can be easily performed from both the front side and the rear side of the backrest portion.

Further, it is another object of the present invention t

According to the present invention, this object is achieved by a child seat according to claim 1. The dependent claims define preferred and advantageous embodiments of the invention.

According to the present invention, there is provided a child seat comprising: a seat main body having a seating portion and a backrest portion; a sliding member having webbing insertion holes and provided in the backrest portion to be vertically movable; a locking mechanism for locking the sliding member; and manipulation pieces for releasing the locking by the locking mechanism to permit the vertical movement of the sliding member. The manipulation pieces are adapted to be manipulated from both the front side and the rear side of the backrest portion.

According to the present invention, the manipulation pieces are adapted to be exposed at the rear side of the backrest portion and to be manipulated from the front side of the backrest portion through manipulation piece insertion openings provided in the sliding member.

In a further, second aspect of the present invention, indicators for indicating the vertical position of the sliding member are provided on at least one side of the sliding member and a member disposed adjacent to the sliding member so as not to be vertically movable.

In a third aspect of the present invention, there is provided a shoulder adjuster installed in the backrest portion of the child seat, comprising a sliding member having webbing insertion holes; and a locking mechanism for locking the sliding member. The sliding member is provided with indicators for indicating the height thereof.

The child seat of a fourth aspect is characterized in that the locking mechanism locks so as to hinder the vertical movement of the sliding member, the sliding member being movable upwards.

### [Effects of the Invention]

According to the present invention, it is possible to manipulate the manipulation pieces of the locking mechanism of the sliding member both from the front and rear side of the backrest portion, so that it is possible to perform the height adjustment of the sliding member from either the front or rear side of the backrest portion. For this reason, even when the child seat is installed in a seat of an automobile toward the front side, it is possible to easily adjust the height of the webbings.

According to the present invention, it is possible to easily perform the manipulation of the manipulation pieces from the rear side and to simply manipulate the manipulation pieces from the front side, for example, by inserting fingers into the openings for manipulation.

According to the second and third aspects of the child seat of the present invention, it is possible to easily recognize the current height of the sliding member. Further, a standard table showing the installation height of the sliding member according to a child's age is written in an operating manual of the child seat, so that it is convenient for a user to make use of the child seat.

According to the fourth aspect of the child seat of the present invention, when the sliding member is pressed upward, the sliding member is moved upward and locked. Therefore, since a user has only to release locking of the manipulation pieces when the sliding member is moved downward, it is possible to easily adjust the height of the sliding member.

Hereinafter, the present invention will be described in more detail with reference to the accompanying drawings.
Fig. 1 is a perspective view, as seen from the front side, of a shoulder adjuster installed in a backrest portion of a child seat according to an embodiment of the invention.
Fig. 2 is a perspective view, as seen from the rear side, of the shoulder adjuster.
Fig. 3 is a perspective view, as seen from the front side, of the child seat.
Fig. 4 is a perspective view, as seen from the rear side, of the child seat.
Fig. 5 is an exploded perspective view of the shoulder adjuster.
Fig. 6 is a horizontal cross-sectional view of the shoulder adjuster (when locked).
Fig. 7 is a horizontal cross-sectional view of the shoulder adjuster (when unlocked).
Fig. 8 is a perspective view showing a conventional child seat.
Fig. 9 is a cross-sectional view of a guide rail according to another embodiment.

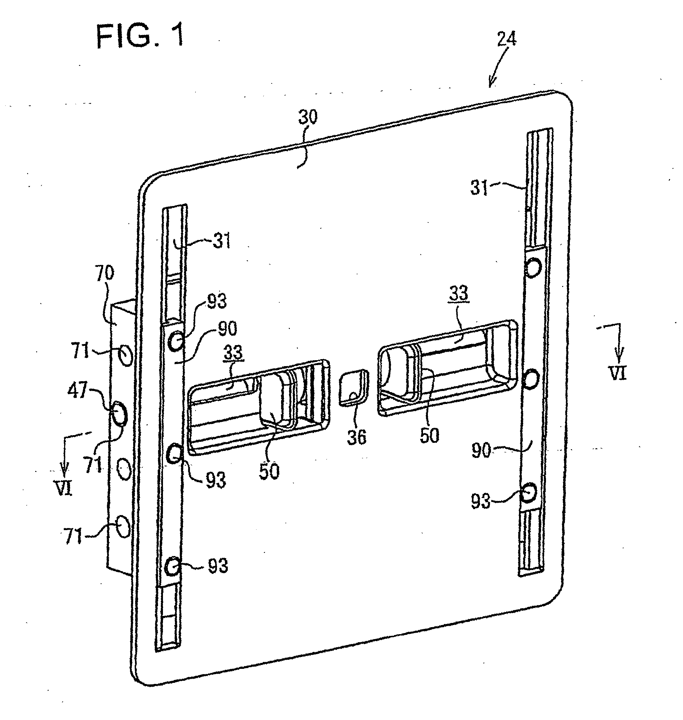

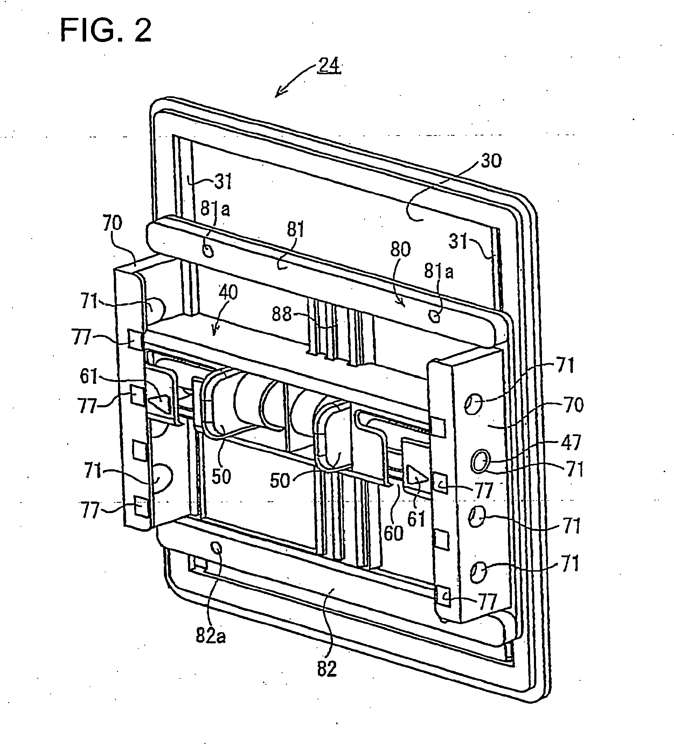

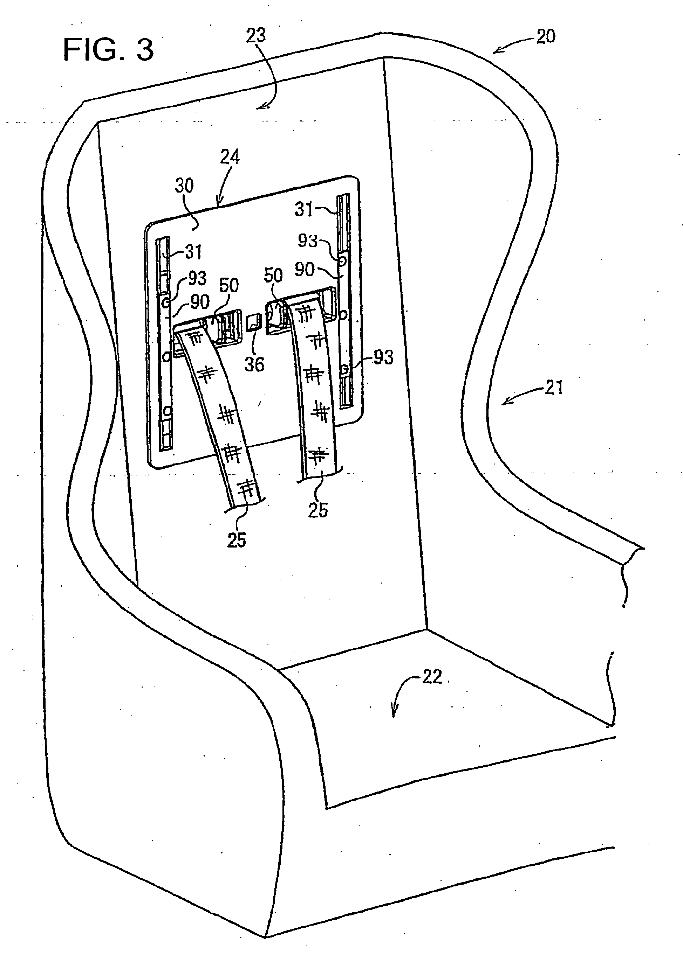

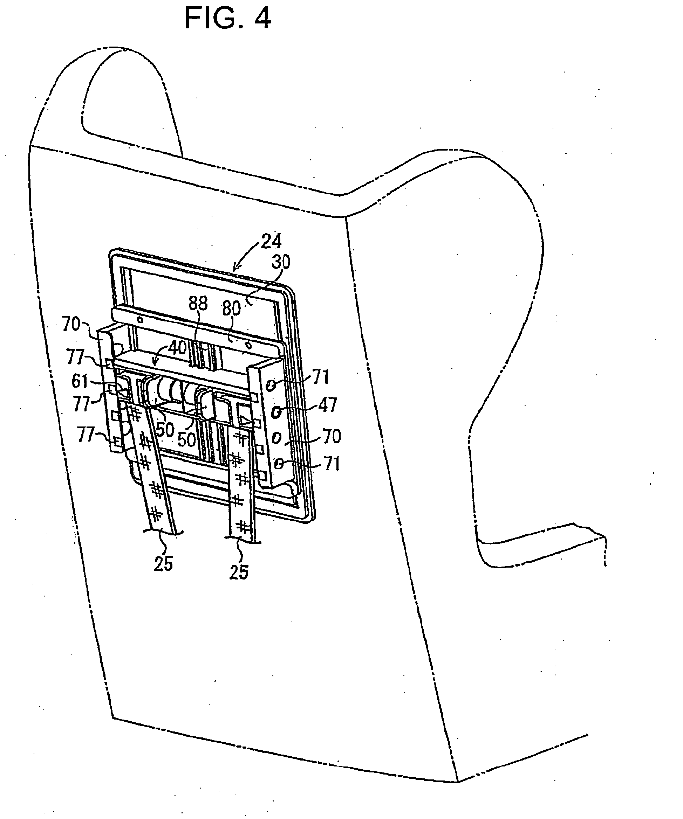

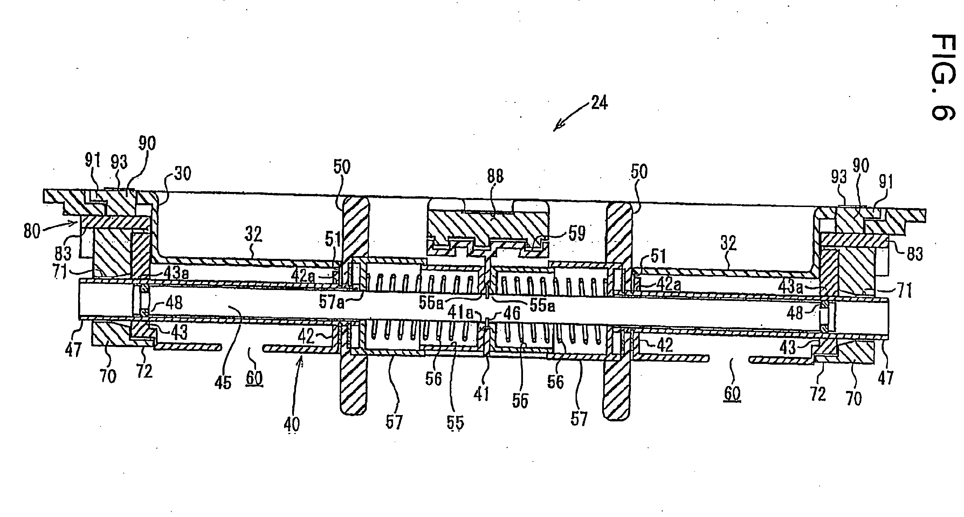

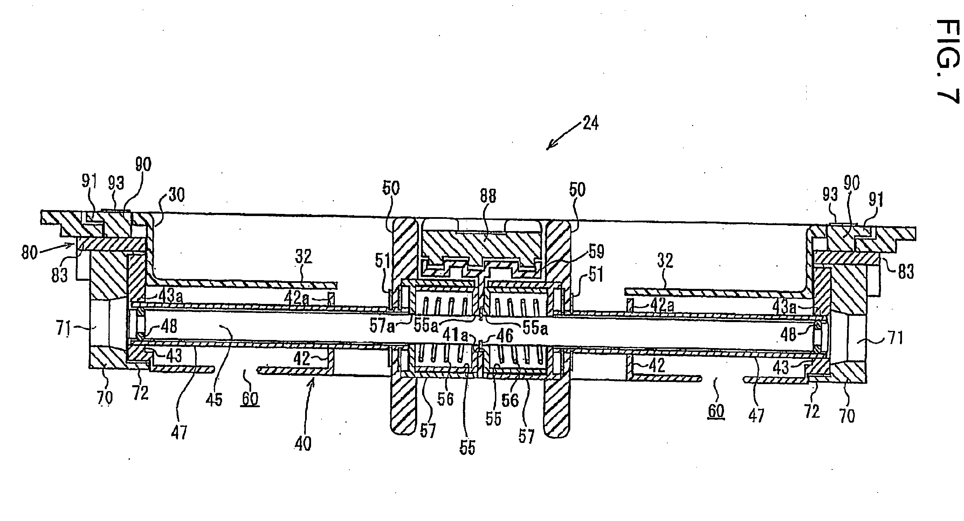

The child seat 20 of Fig. 1 - Fig. 7 includes a seat main body 21 having a seating portion 22 and a backrest portion 23, a shoulder adjuster 24 provided in the backrest portion 23, webbings (shoulder belts) 25 inserted through the shoulder adjuster 24, etc:

The shoulder adjuster 24 is composed of a sliding member which has a sliding plate 30 and a sliding block 40 and is movable in the vertical direction; a guide body having guide rails 70, a fixing frame 80 and sliding-plate pressing members 90; a locking mechanism for inserting and withdrawing locking pieces into and from holes 71 of the guide rails 70 by manipulating manipulation pieces 50 to thereby lock and unlock the guide body of the sliding member; and so forth.

The sliding plate 30 is a substantially flat-plate-shaped member whose front surface is disposed to be flush with a front surface of the backrest portion 23, and has slits 31 extending in a vertical direction on both the left and right sides thereof. Further, left and right rear protrusions 32 are provided to protrude from a rear surface of the sliding plate 30, and each rear protrusion 32 is provided with webbing insertion holes 33 through which the webbings (shoulder belts) 25 are inserted, and notched manipulation piece insertion openings 34 for passing the manipulation pieces 50.

A window hole 36 for viewing a mark is provided around the middle of the sliding plate 30. The sliding block 40 is configured of a box-shaped body whose front surface is opened and takes a substantially rectangular parallelepiped shape extending sideways. The sliding block 40 is provided with five longitudinal walls consisting of a middle wall 41, end walls 43 on both left and right ends, and partition walls 42 located between these end walls. A shaft 45 is installed to pass through the five longitudinal walls 43, 42, 41, 42 and 43.

The shaft 45 is inserted through an opening 41a of the middle wall 41 and fixed to the middle wall 41 by an E-ring 46 so that it cannot be moved to the left and right.

The left and right end walls 43 and the partition walls 42 are provided with openings 43a and 42a through which the shaft 45 is inserted. A gap is formed between an inner circumference of the opening 43a and the shaft 45 so as to allow locking pieces 47 formed of a pipe to be inserted therethrough.

The locking pieces 47 are formed of the hollow pipe as mentioned above, and are slidably fitted around the shaft 45.

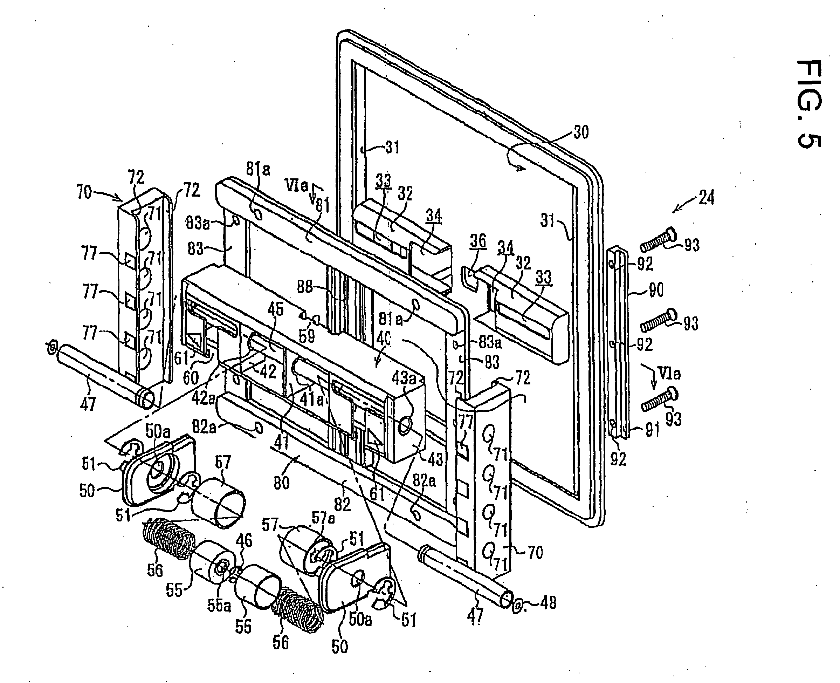

Leading end portions of the locking pieces 47 can pass through the opening 43a of the end wall 43 to protrude outward. Trailing end portions of the locking pieces 47 pass through the openings 42a of the partition walls 42, and are also inserted through openings 50a (Fig. 5) of the manipulation pieces 50. Also, the trailing end portions of the locking pieces 47 are fixed to the manipulation pieces 50 by a pair of E-rings 51, which are positioned so that the manipulation pieces 50 are interposed therebetween.

The manipulation pieces 50 protrude in the rear direction of the shoulder adjuster 24 and pass through the opening 34 to protrude toward the front side.

Spring holding tubes 55 are fitted on both sides, with the middle wall 41 interposed therebetween, around the middle of the shaft 45. Each of the spring holding tubes 55 is a bottomed tube having one end closed and the other end opened, and has the shaft 45 inserted through an opening 55a provided at the one end. About half (second half) of a spring 56 is contained in each spring holding tube 55.

Movable tubes 57 capable of being fitted around the spring holding tubes are disposed to be fitted around the shaft 45. Each of the movable tubes 57 is also a bottomed tubular one, and has the shaft 45 inserted through an opening 57a at its leading end portion. The movable tubes 57 are fitted around the spring holding tubes 55 from the rear side. The first half of the coil spring 56 is contained in each moveable tube 57.

The manipulation pieces 50, the spring holding tubes 55, the movable tubes 57 and the coil springs 56 are disposed between the middle wall 41 and partition walls 42 of the sliding block 40.

The sliding block 40 is provided with longitudinal grooves 59 which are engaged with guide rails 88, respectively, to be described below. Further, the sliding block 40 is provided with slit-like openings 60 for the webbings 25 to be inserted therethrough. In addition, triangular marks 61 are attached to the sliding block 40 on the rear side of the child seat.

The guide rails 70 are vertically disposed along both the left and right sides of the sliding block 40 in order to guide the vertical movement of the sliding block 40.

The guide rails 70 are provided with a pair of ribs 72 protruding from lengthwise side edges thereof. Both the left and right ends of the sliding block 4-0 are fitted to freely slide between the ribs 72.

The guide rails 70 are provided with a plurality of locking holes 71 which are spaced apart from each other at regular intervals in the vertical direction. The leading ends of the locking pieces 47 can be inserted into the locking holes 71.

Further, indicators 77 are provided on the rear side of the child seat of the guide rails 70 at regular intervals in the vertical direction.

Each of the guide rails 70 is disposed along both the left and right sides of the fixing frame 80 and is fixed to the fixing frame 80 by screws 93. The fixing frame 80 is square frame-shaped, which has an upper frame 81, a lower frame 82 and left and right longitudinal frames 83, wherein the longitudinal frames 83 are provided with insertion holes 83a for the screws 93.

The upper frame 81 and the lower frame 82 are provided with insertion holes 81a and 82a for bolts (not shown) which fix the fixing frame 80 to the seat main body of the child seat.

The guide rails 88 are longitudinally installed between intermediate portions of the upper frame 81 and lower frame 82. The longitudinal grooves 59 of the sliding block 40 are engaged with the guide rails 88. The longitudinal grooves 59 are provided with marks for indicating height at regular intervals in the vertical direction. The marks can viewed with the naked eye through the window hole 36 of the sliding plate 30 from the front of the shoulder adjuster 24.

The sliding plate 30 is attached to be movable with respect to the guide rails 70 and the fixing frame 80. This attachment is carried out by slidably fitting sliding-plate pressing members 90 into the slits 31 of the sliding plate 30 at both sides thereof, and by fixing the sliding-plate pressing members 90 to the fixing frame 80 and the guide rails 70 with the screws 93.

The sliding-plate pressing members 90 are provided with projecting portions 91. The sliding plate 30 is slidably sandwiched between the projecting portions 91 and the fixing frame 80.

Further, the sliding-plate pressing members 90 are provided with insertion holes 92 for the screws 93. The screws 93 are screwed into the guide rails 70 through the insertion holes 92 and the insertion holes 83a of the longitudinal frames 83 of the fixing frame 80.

The shoulder adjuster 24 is fixed to the backrest portion 23 of the seat main body 21 by bolts. The bolts are inserted through the insertion holes 81a and 82a of the fixing frame 80. The webbings 25 are positioned through the webbing insertion holes 33 and the openings 60.

In the shoulder adjuster 24, the manipulation pieces 50 are restrained by the coil springs 56, and are pressed against the partition walls 42. The locking pieces 47, to whose trailing ends the manipulation pieces 50 are anchored, have their leading ends protruding from the end wall 43 of the sliding block 40 to be inserted into the locking holes 71 of the guide rails 70. Thereby, the sliding block 40 is fixed and stopped at a predetermined height.

In order to adjust the height of the webbings 25; the manipulation pieces 50 are caused to move in a direction approaching each other by fingers. With the approaching movement of the manipulation pieces 50, the locking pieces 47 are caused to move in a direction approaching each other, and then each of the leading ends of the locking pieces 47 comes out of the locking holes 71. Thus, when the manipulation pieces 50 are maintained in this state, the sliding block 40 is caused to move in the vertical direction. After viewing the marks of the longitudinal grooves 59 through the window hole 36, or at a desired height where the marks 61 and the indicators 77 coincide with each other, the fingers are released from the manipulation pieces 50. When doing so, the manipulation pieces 50 are pressed and advanced by the coil springs 56 until they abut on the partition walls 42. Also, the locking pieces 47 are advanced, and thus their leading ends are inserted into the locking holes 71. This allows the height adjustment of the webbings 25 to be easily carried out.

In the shoulder adjuster, the manipulation pieces 50 not only protrude from the sliding block 40 toward the rear side of the child seat, but also protrude toward the front side of the sliding plate 30 through the openings 34. For this reason, the manipulation pieces 50 can be manipulated from the front side as well as from the rear side of the child seat, so that it is possible to easily perform the height adjustment from any one of the front and rear sides of the child seat.

In addition, it is possible to look at the height indicators through the window hole 36 from the front sideand at the marks 61 and the indicators 77 from the rear side, so that it is possible to easily recognize the current height of the webbings.

In the above embodiments, since the locking holes 71 of the guide rails 70 are circular openings, irrespective of the upward or downward movement of the sliding block 40, it is necessary to move the manipulation pieces 50 and 50 in an approaching direction by pinching them together with the user's fingers.

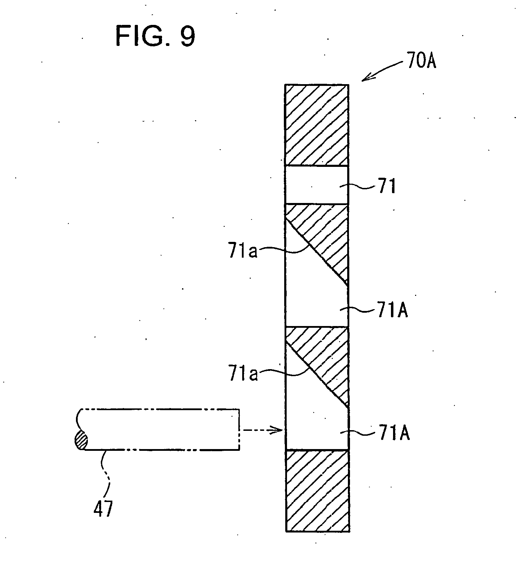

On the contrary, the guide rail 70A shown in Fig. 9 is provided with locking holes 71A having a vertical section of a trapezoidal shape instead of the round locking hole 71, except for the uppermost locking hole 71. The leading ends of the locking pieces 47 are respectively positioned in the locking holes 71A while the manipulation pieces 50 and 50 are not pinched together by the user's fingers.

Each locking hole 71A has an inclined surface 71a at its ceiling side, and an horizontal surface at its bottom side. Therefore, if the sliding block 40 is pressed upward, the leading end of the locking piece 47 slides along the inclined surface 71a, the locking pieces 47 and 47 are withdrawn in the approaching direction, and the sliding block 40 moves upward. If the locking pieces 47 reach the upper locking holes 71A, the locking pieces 47 and 47 are urged away from each other by a biasing force of the coil spring 56, and enter the upper locking holes 71A. In this way, when the sliding block 40 is moved upward, a user has only to press the sliding block 40 without pinching together the locking pieces 47 and 47, so that the manipulation is simple. In addition, when the sliding block 40 is moved downward, similar to the above embodiments, the locking pieces 47 and 47 are caused to approach each other, for example, by pinching them together.

The foregoing embodiments are only an example of the present invention. The present invention as defined by the claims may take any forms other than the ones shown.

## Claims

1. A child seat (20) comprising:
a seat main body (21) having a seating portion (22) and a backrest portion (23);
a sliding member (30, 40) having webbing insertion holes (33) and provided in the backrest portion (23) to be vertically movable;
a locking mechanism (47, 71; 71A) for locking the sliding member (30, 40); and
manipulation pieces (50) for releasing the locking by the locking mechanism (47, 71; 71A) to allow the movement of the sliding member (30, 40),
wherein the manipulation pieces (50) are adapted to be manipulated from both the front side and the rear side of the backrest portion (23),
**characterized in that**
the manipulation pieces (50) are adapted to be exposed at the rear side of the backrest portion (23) and are adapted to be manipulated from the front side of the backrest portion (23) through manipulation piece insertion openings (34) provided in the sliding member (30, 40).

2. The child seat (20) according to Claim 1,
wherein indicators (61, 77) for indicating the vertical position of the sliding member (30, 40) are provided on at least one of the sliding member (30, 40) and a member (70) disposed adjacent to the sliding member so as not to be vertically movable.

3. The child seat (20) according to any one of Claim 1 or Claim 2,
wherein the manipulation pieces (50) are adapted to be moved in a direction approaching each other for releasing the locking by the locking mechanism (47, 71; 71A).

4. The child seat (20) according to Claim 3,
wherein the manipulation pieces (50) are adapted to be moved horizontally by a user for releasing the locking by the locking mechanism (47, 71; 71A).

5. The child seat (20) according to any one of Claims 1-4,
wherein the locking mechanism comprises locking pieces (47) being engaged with respective locking holes (71; 71A) when the locking mechanism is in its locking state, and
wherein the manipulation pieces (50) are adapted to move the locking pieces (47) out of the locking holes (71; 71A) for releasing the locking by the locking mechanism.

6. The child seat (20) according to Claim 5,
wherein the locking pieces (47) are slidably fitted around a shaft (45).

7. The child seat (20) according to Claim 5 or Claim 6,
wherein the manipulation pieces (50) are coupled to the locking pieces (47) and are biased by springs (56) in a direction towards the locking holes (71).

8. The child seat (20) according to any one of Claims 1-7,
wherein the locking mechanism (47, 71; 71A) is adapted to lock the sliding member (30, 40) by hindering vertical movement of the sliding member (30, 40) downwards, the sliding member (30, 40) being moveable upwards.

9. The child seat (20) according to Claim 8,
wherein the locking mechanism comprises locking pieces (47) being engaged with respective locking holes (71A) when the locking mechanism is in its locking state, the locking holes (71A) having an inclined surface (71a) at their ceiling sides and a horizontal surface at their bottom sides.

10. The child seat (20) according to Claim 9,
wherein the locking holes (71) have a trapezoidal vertical cross-section.

11. The child seat (20) according to Claim 9 or Claim 10,
wherein the locking holes (71A) are arranged vertically along a guide rail (70A), an uppermost locking hole (71) of the guide rail (70A) having a round vertical cross-section.

12. The child seat (20) according to any one of Claims 1-11, further comprising a shoulder adjuster (24) installed in the backrest portion (23), the shoulder adjuster (24) comprising:
the sliding member (30, 40) having the webbing insertion holes (33); and
the locking mechanism (47, 71; 71A) for locking the sliding member (30, 40),
wherein the sliding member (30, 40) is provided with indicators (61, 77) for indicating the height thereof.

## Patentansprüche

1. Kindersitz (20), umfassend:
einen Sitzhauptkörper (21) mit einem Sitzabschnitt (22) und einem Lehnenabschnitt (23);
ein Schiebeelement (30, 40), welches Gurtbandeinführungslöcher (33) aufweist und in dem Lehnenabschnitt (23) vorgesehen ist, um vertikal beweglich zu sein;
einen Verriegelungsmechanismus (47, 71; 71A) zum Verriegeln des Schiebeelements (30, 40); und
Betätigungsteile (50) zum Lösen der Verriegelung durch den Verriegelungsmechanismus (47, 71; 71A), um die Bewegung des Schiebeelements (30, 40) zu ermöglichen,
wobei die Betätigungsteile (50) ausgestaltet sind, um von sowohl der Vorderseite als auch der Rückseite des Lehnenabschnitts (23) betätigt zu werden,
**dadurch gekennzeichnet, dass**
die Betätigungsteile (50) ausgestaltet sind, an der Rückseite des Lehnenabschnitts (23) freiliegend zu sein, und ausgestaltet sind, um von der Vorderseite des Lehnenabschnitts (23) durch Betätigungsteileinführungsöffnungen (34), welche in dem Schiebeelement (30, 40) vorgesehen sind, betätigt zu werden.

2. Kindersitz (20) nach Anspruch 1,
wobei Anzeigen (61, 77) zum Anzeigen der vertikalen Position des Schiebeelements (30, 40) an dem Schiebeelement (30, 40) und/oder einem Element (70), welches benachbart zu dem Schiebeelement angeordnet ist, um nicht vertikal beweglich zu sein, vorgesehen sind.

3. Kindersitz (20) nach einem der Ansprüche 1 oder 2,
wobei die Betätigungsteile (50) ausgestaltet sind, um in einer einander nähernden Richtung zum Lösen der Verriegelung durch den Verriegelungsmechanismus (47, 71; 71A) bewegt zu werden.

4. Kindersitz nach Anspruch 3,
wobei die Betätigungsteile (50) ausgestaltet sind, um von einem Benutzer zum Lösen der Verriegelung durch den Verriegelungsmechanismus (47, 71; 71A) horizontal bewegt zu werden.

5. Kindersitz (20) nach einem der Ansprüche 1-4,
wobei der Verriegelungsmechanismus Verriegelungsteile (47), welche sich mit entsprechenden Verriegelungslöchern (71; 71A) in Eingriff befinden, wenn der Verriegelungsmechanismus in seinem verriegelten Zustand ist, umfasst, und
wobei die Betätigungsteile (50) ausgestaltet sind, die Verriegelungsteile (47) zum Lösen der Verriegelung durch den Verriegelungsmechanismus aus den Verriegelungslöchern (71; 71A) zu bewegen.

6. Kindersitz (20) nach Anspruch 5,
wobei die Verriegelungsteile (47) verschiebbar um eine Welle (45) angebracht sind.

7. Kindersitz (20) nach Anspruch 5 oder Anspruch 6,
wobei die Betätigungsteile (50) mit den Verriegelungsteilen (47) gekoppelt sind und durch Federn (56) in einer Richtung in Richtung der Verriegelungslöcher (71) vorgespannt sind.

8. Kindersitz (20) nach einem der Ansprüche 1-7,
wobei der Verriegelungsmechanismus (47, 71; 71A) ausgestaltet ist, das Schiebeelement (30, 40) durch Verhindern einer vertikalen Bewegung des Schiebeelements (30, 40) nach unten zu verriegeln, wobei das Schiebeelement (30, 40) nach oben beweglich ist.

9. Kindersitz (20) nach Anspruch 8,
wobei der Verriegelungsmechanismus Verriegelungsteile (47) umfasst, welche sich mit entsprechenden Verriegelungslöchern (71A) in Eingriff befinden, wenn der Verriegelungsmechanismus in seinem verriegelten Zustand ist, wobei die Verriegelungslöcher (71A) eine geneigte Fläche (71a) an ihren Deckenseiten und eine horizontale Fläche an ihren Bodenseiten aufweisen.

10. Kindersitz (20) nach Anspruch 9,
wobei die Verriegelungslöcher (71) einen trapezförmigen Vertikalquerschnitt aufweisen.

11. Kindersitz (20) nach Anspruch 9 oder Anspruch 10,
wobei die Verriegelungslöcher (71A) vertikal entlang einer Führungsschiene (70A) angeordnet sind, wobei ein oberstes Verriegelungsloch (71) der Führungsschiene (70A) einen runden Vertikalquerschnitt aufweist.

12. Kindersitz (20) nach einem der Ansprüche 1-11,
ferner umfassend eine Schultereinstellvorrichtung (24), welche in dem Lehnenabschnitt (23) angebracht ist, wobei die Schultereinstellvorrichtung (24) umfasst:
das Schiebeelement (30, 40) mit den Gurteinführungslöchern (33); und
den Verriegelungsmechanismus (47, 71; 71A) zum Verriegeln des Schiebeelements (30, 40),
wobei das Schiebeelement (30, 40) mit Anzeigen (61, 77) zum Anzeigen der Höhe davon versehen ist.

## Revendications

1. Siège pour enfant (20), comprenant:
une partie principale de siège (21) ayant une partie d'assise (22) et une partie de dossier (23) ;
un organe coulissant (30, 40), comprenant des trous (33) d'insertion de sangle et prévu dans la partie de dossier (23) pour être déplaçable verticalement ;
un mécanisme de verrouillage (47, 71 ; 71A), pour verrouiller l'organe coulissant (30, 40) ; et
des éléments de manipulation (50), pour annuler le verrouillage par le mécanisme de verrouillage (47, 71 ; 71 A), pour permettre le déplacement de l'organe coulissant (30, 40) ;
dans lequel les éléments de manipulation (50) sont adaptés pour être manipulés depuis à la fois le côté avant et le côté arrière de la partie de dossier (23),
**caractérisé en ce que** les éléments de manipulation (50) sont adaptés pour être exposés sur le côté arrière de la partie de dossier (23) et sont adaptés pour être manipulés depuis le côté avant de la partie de dossier (23) à travers des ouvertures d'insertion d'éléments de manipulation (34) prévues dans l'organe coulissant (30, 40).

2. Siège pour enfant (20) selon la revendication 1, dans lequel des indicateurs (61, 77) pour indiquer la position verticale de l'organe coulissant (30, 40) sont prévus sur au moins l'un de l'organe coulissant (30, 40) et d'un organe (70), disposé de façon adjacente à l'organe coulissant, de manière à ne pas être déplaçable verticalement.

3. Siège pour enfant (20) selon l'une quelconque de la revendication 1 ou de la revendication 2, dans lequel les éléments de manipulation (50) sont adaptés pour être déplacés dans une direction de rapprochement les uns des autres, pour annuler le verrouillage effectué par le mécanisme de verrouillage (47, 71 ; 71A).

4. Siège pour enfant (20) selon la revendication 3, dans lequel les éléments de manipulation (50) sont adaptés pour être déplacés horizontalement par un utilisateur pour annuler le verrouillage réalisé par le mécanisme de verrouillage (47, 71 ; 71A).

5. Siège pour enfant (20) selon l'une quelconque des revendications 1 à 4, dans lequel le mécanisme de verrouillage comprend des éléments de verrouillage (47), mis en prise avec des trous de verrouillage (71 ; 71A) respectifs, lorsque le mécanisme de verrouillage se trouve à son état de verrouillage, dans lequel les éléments de manipulation (50) sont adaptés pour déplacer les éléments de verrouillage (47) hors des trous de verrouillage (71 ; 71A), pour annuler le verrouillage effectué par le mécanisme de verrouillage.

6. Siège pour enfant (20) selon la revendication 5, dans lequel les éléments de verrouillage (47) sont montés coulissant autour d'un arbre (45).

7. Siège pour enfant (20) selon la revendication 5 ou la revendication 6, dans lequel les éléments de manipulation (50) sont couplés aux éléments de verrouillage (47) et sont sollicités par des rassorts (56), dans le sens allant vers les trous de verrouillage (71).

8. Siège pour enfant (20) selon l'une quelconque des revendications 1 à 7, dans lequel le mécanisme de verrouillage (47, 71 ; 71A) est adapté pour verrouiller l'organe coulissant (30, 40) en empêchant le déplacement vertical de l'organe coulissant (30, 40) vers le bas, l'organe coulissant (30, 40) étant déplaçable vers le haut.

9. Siège pour enfant (20) selon la revendication 8, dans lequel le mécanisme de verrouillage (47, 71 ; 71A) comprend des éléments de verrouillage (47), mis en prise avec des trous de verrouillage (71A) respectifs, lorsque le mécanisme de verrouillage se trouve dans son état de verrouillage, les trous de verrouillage (71 A) ayant une surface inclinée (71a) à leurs côtés de plafond et une surface horizontale à leurs côtés de fond.

10. Siège pour enfant (20) selon la revendication 9, dans lequel les trous de verrouillage (71) ont une section transversale verticale trapézoïdale.

11. Siège pour enfant (20) selon la revendication 9 ou la revendication 10, dans lequel les trous de verrouillage (71 A) sont agencés verticalement le long d'un rail de guidage (70A), un trou de verrouillage (71) le plus haut du rail de guidage (70A) ayant une section transversale verticale ronde.

12. Siège pour enfant (20) selon l'une quelconque des revendications 1 à 11, comprenant en outre un dispositif de réglage pour les épaules (24), installé dans la partie de dossier (23), le dispositif de réglage pour les épaules (24) comprenant :
l'organe coulissant (30, 40), comprenant les trous d'insertion de sangle (33) ; et
le mécanisme de verrouillage (47, 71 ; 71A), pour verrouiller l'organe coulissant (30, 40),
l'organe coulissant (30, 40) étant muni d'indicateurs (61, 77), pour indiquer leur hauteur.
